# EUROPÄISCHE PATENTANMELDUNG

(11) **EP 0 723 849 A1**
(43) Veröffentlichungstag der Anmeldung: **31.07.1996**
(21) Anmeldenummer: 95119038.8
(22) Anmeldetag: 04.12.1995
(51) Int. Cl.: B29C 47/88

(54) **Folienblaskopf zur Herstellung von Schlauchfolien aus thermoplastischem Kunststoff**

(30) Priorität: 20.01.1995 DE 19501669
(71) Anmelder: Windmöller & Hölscher, D-49525 Lengerich (DE)
(72) Erfinder: Twiehoff, Karl-Heinz, D-48431 Rheine (DE)

(57) **Zusammenfassung**

Ein Folienblaskopf zur Herstellung von Schlauchfolien aus thermoplastischem Kunststoff besitzt Leitungen zum Zu- und Abführen von Innenkühlluft, mindestens einen Zuführungskanal für die Kunststoffschmelze, der in einer ringförmigen Austrittsdüse mündet und einen den extrudierten Kunststoffschlauch einfassenden Außenkühlring, dessen Innenraum in Sektoren (14) unterteilt ist, in denen die auf den extrudierten Folienschlauch geblasene Luft unterschiedlich erwärmbar oder kühlbar ist. Um zu verhindern, daß die die durch den Außenkühlring strömende Luft kühlenden oder erwärmenden Temperierelemente (16) den Kühlluftstrom stören, ist mindestens eine jeden Sektor (14) begrenzende Wand (13,15) des Außenkühlrings in gesteuerter Weise erwärmbar oder kühlbar.

## Beschreibung

Die Erfindung betrifft einen Folienblaskopf zur Herstellung von Schlauchfolien aus thermoplastischem Kunststoff mit Leitungen zum Zu- und Abführen von Innenkühlluft, mit mindestens einem Zuführungskanal für die Kunststoffschmelze, der in einer ringförmigen Austrittsdüse mündet, mit einem den extrudierten Kunststoffschlauch einfassenden Außenkühlring, dessen Innenraum in Sektoren unterteilt ist, in denen die auf den extrudierten Folienschlauch geblasene Luft unterschiedlich erwärmbar oder kühlbar ist.

Es sind Folienblasköpfe unterschiedlicher Ausführungsformen bekannt, bei denen die in axialer Richtung durch den Folienblaskopf zugeführte und abgesogene Innenkühlluft der Kühlung des extrudierten Folienschlauches und dem Aufblasen des Folienschlauches zu einer den schmelzflüssigen Kunststoffschlauch ausreckenden Schlauchfolienblase dient. Der Außenkühlring weist einen auf den extrudierten Folienschlauch gerichteten ringförmigen Düsenspalt auf, durch den dieser mit Kühlluft angeblasen wird, so daß dieser zur Erhöhung der Ausstoßleistung schnell mit möglichst tief liegender sogenannter "Frostlinie" abgekühlt wird.

Um die Dicke des zu einer Schlauchfolienblase aufgeblasenen Folienschlauches über dessen Umfang regeln zu können, ist es bekannt, die schlauchförmig extrudierte Kunststoffschmelze über ihren Umfang abschnittweise unterschiedlich zu erwärmen und/oder zu kühlen, um das Dickenprofil zu beeinflussen. Hierbei wird die Wirkung ausgenutzt, daß beim Aufblasen des Kunststoffschlauches zu einer Schlauchblase die wärmeren Bereiche stärker und die kühleren Bereiche weniger stark ausgereckt werden.

Um über den Umfang eines extrudierten Folienschlauches vor dessen Aufblasen zu einer Schlauchblase ein Temperaturprofil zu erzeugen, das nach dem Aufblasen zu einer Schlauchblase mit möglichst gleicher Wandungsdicke führt, ist aus EP-A-0 508 167 ein Außenkühlring mit einem im wesentlichen ringförmigen Verteilerkanal, einem ringförmigen Austrittsspalt zum Ausblasen gekühlter Luft in Richtung auf den extrudierten Schlauch und Strömungspfaden für die gekühlte Luft zwischen dem ringförmigen Verteilerkanal und dem ringförmigen Austrittsspalt bekannt, bei dem in den Strömungspfaden Heizpatronen zur Änderung der Temperatur der Kühlluft angeordnet sind. Dieser bekannte Außenkühlring weist nun den Nachteil auf, daß die Heizpatronen nur eine verhältnismäßig kleine zylindrische Mantelfläche besitzen, so daß an die durch die sektorförmigen Strömungspfade strömende Kühlluft nur verhältnismäßig geringe Wärmemengen abgegeben werden können, und daß die Heizpatronen das ungestörte Ausströmen der Kühlluft behindern.

Aufgabe der Erfindung ist es daher, einen Folienblaskopf der eingangs angegebenen Art zu schaffen, bei dem die die durch den Außenkühlring strömende Luft kühlenden oder erwärmenden Temperierelemente den Kühlluftstrom nicht stören.

Erfindungsgemäß wird diese Aufgabe bei einem Folienblaskopf der gattungsgemäßen Art dadurch gelöst, daß mindestens eine jeden Sektor begrenzende Wand des Außenkühlrings in gesteuerter Weise erwärmbar oder kühlbar ist. Bei dem erfindungsgemäßen Folienblaskopf wird die jeden Sektor des Außenkühlrings durchströmende Kühlluft in gesteuerter Weise dadurch erwärmt oder gekühlt, daß sie über die mindestens eine Wandung jedes Sektors streicht. Da bei dem erfindungsgemäßen Folienblaskopf keine in den Sektoren angeordneten Temperierelemente oder Heizpatronen mehr vorhanden sind, kann die Luft ungestört aus der ringförmigen Austrittsdüse des Kühlringes austreten und den zu kühlenden Folienschlauch mit gleichmäßiger Anströmung kühlen.

Zweckmäßigerweise sind auf den Deckwänden der einzelnen Sektoren in ihrer Heizleistung steuerbare Temperierelemente angeordnet. Die Temperierelemente können auch in die Deckwände selbst eingelassen sein. Um einen guten Wärmeübergang von den Temperierelementen auf die Deckwände zu gewahrleisten, sind die Temperierelemente zweckmäßigerweise scheibenförmig ausgebildet. Um eine möglichst hohe Wärmemenge einbringen zu können, sind die Temperierelemente vorzugsweise entsprechend den Sektoren selbst auch sektorförmig ausgebildet.

Die Temperierelemente können auch aus mindestens jeweils einem an den den Sektoren zugeordneten Teilen der Deckwandung angeordneten streifenförmigen Elementen bestehen. Sind mehrere streifenförmige Elemente vorgesehen, werden diese zweckmäßigerweise konzentrisch zueinander angeordnet.

Vorzugsweise sind die den Sektoren zugeordneten sektorartigen Teile der Deckwandung durch wärmeisolierende Streifen oder Spalte voneinander getrennt, so daß eine gegenseitige Wärmebeeinflussung der Teile der Deckwandung unterbunden ist.

Die Sektoren des Innenraums des Außenkühlrings können durch radiale Wände voneinander getrennt sein. Nach einer bevorzugten Ausführungsform ist vorgesehen, daß zusätzlich oder für sich allein in Bohrungen der radialen Wände Temperierelemente eingesetzt sind.

Die Temperierelemente können aus kühlenden oder erwärmenden Elementen beliebiger Art bestehen. Als kühlende oder erwärmende Medien können Gase oder Flüssigkeiten verwendet werden. Zweckmäßigerweise sind die Temperierelemente jedoch elektrische Heizelemente.

Ein Ausführungsbeispiel der Erfindung wird nachstehend anhand der Zeichnung näher erläutert. In dieser zeigt
- Fig. 1: einen vertikalen Querschnitt durch einen Folienblaskopf mit dem erfindungsgemäßen Außenkühlring und

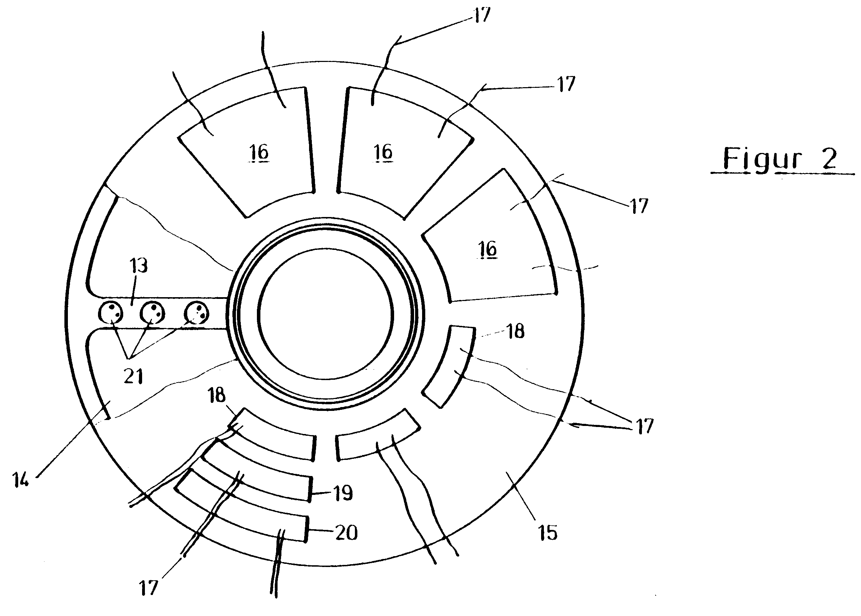

- Fig. 2: eine Draufsicht auf den Folienblaskopf nach Fig. 1.

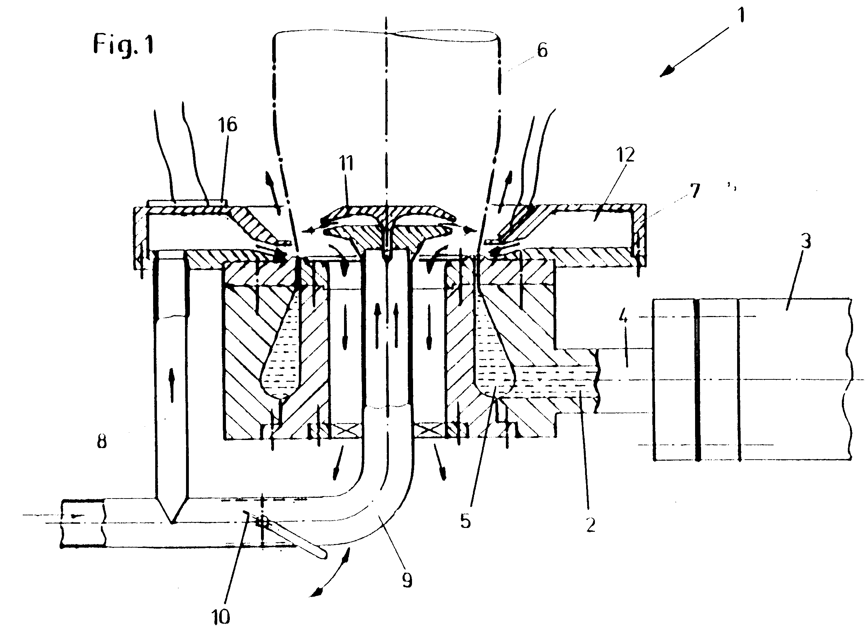

Dem aus Fig. 1 ersichtlichen Folienblaskopf 1 wird die Kunststoffschmelze 2 von einer schematisch angeordneten Strangpresse 3 über ein Anschlußstück 4 zugeführt. Die Kunststoffschmelze 2 tritt in einen ringförmigen Verteilerkanal 5 des Folienblaskopfes ein, der sich nach oben hin verengt und in die ringförmige Austrittsdüse des Folienblaskopfes mündet. Der strichpunktiert angedeutete Folienschlauch 6 tritt aus dem ringförmigen Düsenspalt der Austrittsdüse aus, der in der dargestellten Weise durch zwei Mundstückringe gebildet ist. Auf dem äußeren Mundstückring liegt der Außenkühlring 7 auf, der durch einen den Folienschlauch 6 einfassenden Ringspalt die Kühlluft auf die extrudierte Schlauchfolie unmittelbar oberhalb des Düsenspalts bläst.

Die zugeführte Kühlluft wird von einem nicht dargestellten Gebläse für die Innen- und Außenkühlung gemeinsam gefördert und über ein Verbindungsrohr 8 dem Außenkühlring 7 und über ein Rohr 9 mit einer Drosselklappe 10 zur Steuerung des Aufblasverhältnisses dem Innenkühlring 11 zugeleitet, dessen Austrittsspalt auf die Innenwandung des extrudierten Folienschlauches gerichtet ist. Der grundsätzliche Aufbau dem aus Fig. 1 ersichtlichen Folienblaskopfes ist aus DE-A-19 60 962 bekannt, auf die der Einfachheit halber zur weiteren Beschreibung verwiesen wird.

Der Ringraum 12 des Außenkühlrings 7 ist durch radial verlaufende Zwischenwandungen 13 in sektorförmige Kammern 14 unterteilt, wobei jede dieser Kammern 14 auf ihrer Unterseite mit einem Anschlußstutzen zum Anschluß der Verbindungsrohre 8 oder auch von Verbindungsschläuchen versehen ist.

Auf dem jeder sektorförmigen Kammer 14 zugeordneten Teil der Deckwandung 15 sind nach einer ersten Ausführungsform sektorförmige Temperierelemente 16 befestigt. Diese bestehen zweckmäßigerweise aus plattenförmigen, elektrischen Heizelementen, die mit stromzuführenden Kabeln 17 verbunden sind.

Nach einer zweiten Ausführungsform bestehen die auf den den sektorförmigen Kammern 14 zugeordneten Teilen der Deckwandungen befestigten Temperierelemente aus streifenförmigen Elementen 18. Diese streifenförmigen Elemente können ebenfalls konzentrisch um den extrudierten Folienschlauch gekrümmt sein.

Nach einer dritten Ausführungsform sind auf dem jeder Kammer 14 zugeordneten Teil der Deckwandung mehrere streifenförmige Temperierelemente 18, 19, 20 befestigt, die konzentrisch zueinander angeordnet sind.

Für sich allein oder zusätzlich können die die sektorförmigen Kammern 14 voneinander trennenden radialen Zwischenwandungen 13 mit vertikalen Bohrungen versehen sein, in denen eine oder mehrere elektrische Heizpatronen 21 angeordnet sind.

## Patentansprüche

1. Folienblaskopf zur Herstellung von Schlauchfolien aus thermoplastischem Kunststoff
mit Leitungen zum Zu- und Abführen von Innenkühlluft,
mit mindestens einem Zuführungskanal für die Kunststoffschmelze, der in einer ringförmigen Austrittsdüse mündet, und
mit einem den extrudierten Kunststoffschlauch einfassenden Außenkühlring, dessen Innenraum in Sektoren unterteilt ist, in denen die auf den extrudierten Folienschlauch geblasene Luft unterschiedlich erwärmbar oder kühlbar ist,
**dadurch gekennzeichnet,**
daß mindestens eine jeden Sektor (14) begrenzende Wand (13, 14) des Außenkühlrings (7) in gesteuerter Weise erwärmbar oder kühlbar ist.

2. Folienblaskopf nach Anspruch 1, dadurch gekennzeichnet, daß auf den den einzelnen Sektoren (14) zugeordneten Teilen der Deckwand (15) in ihrer Heizleistung steuerbare Temperierelemente (16, 17, 18, 19, 20) angeordnet sind.

3. Folienblaskopf nach Anspruch 1 oder 2, dadurch gekennzeichnet, daß die Temperierelemente in die Deckwände eingelassen sind.

4. Folienblaskopf nach einem der Ansprüche 1 bis 3, dadurch gekennzeichnet, daß die Temperierelemente scheibenförmig ausgebildet sind.

5. Folienblaskopf nach einem der Ansprüche 1 bis 4, dadurch gekennzeichnet, daß die Temperierelemente entsprechend den Sektoren (14) sektorförmig ausgebildet sind.

6. Folienblaskopf nach einem der Ansprüche 1 bis 4, dadurch gekennzeichnet, daß die Temperierelemente aus mindestens jeweils einem an den den Sektoren zugeordneten Teilen der Deckwandung angeordneten, streifenförmigen Element besteht.

7. Folienblaskopf nach Anspruch 6, dadurch gekennzeichnet, daß die Temperierelemente aus mehreren konzentrisch angeordneten, streifenförmigen Elementen bestehen.

8. Folienblaskopf nach einem der Ansprüche 1 bis 7, dadurch gekennzeichnet, daß die den Sektoren (14) zugeordneten sektorförmigen Teile der Deckwandung durch wärmeisolierende Streifen oder Spalte voneinander getrennt sind.

9. Folienblaskopf nach einem der Ansprüche 1 bis 8, dadurch gekennzeichnet, daß die Sektoren (14) des Innenraums des Außenkühlrings (7) durch radiale Wände (13) voneinander getrennt sind.

10. Folienblaskopf nach Anspruch 9, dadurch gekennzeichnet, daß in Bohrungen der radialen Wände (13) Temperierelemente (21) eingesetzt sind.

11. Folienblaskopf nach einem der Ansprüche 1 bis 10, dadurch gekennzeichnet, daß die Temperierelemente elektrische Heizelemente sind.
